# FASCICULE DE BREVET EUROPEEN

(11) **EP 3 605 778 B1**
(45) Date de publication et mention de la délivrance du brevet: **16.06.2021**
(21) Numéro de dépôt: 18186368.9
(22) Date de dépôt: 30.07.2018
(51) Int. Cl.: H02J 7/00, B60L 58/22

(54) **UNITÉ ET SYSTÈME D'ÉQUILIBRAGE SANS FIL POUR CELLULE DE BATTERIE**
DRAHTLOSE BATTERIEZELLENAUSGLEICHSEINHEIT UND-SYSTEM
WIRELESS BALANCING UNIT AND SYSTEM FOR A BATTERY CELL

(43) Date de publication de la demande: 05.02.2020
(73) Titulaire: Belenos Clean Power Holding AG, 2502 Bienne (CH)
(72) Inventeur: Fasano, Mariano, 2952 Cornol (CH); Toth, Antoine, 2800 Delémont (CH)
(74) Mandataire: ICB SA

(56) Documents cités:
- US-A- 6 100 663
- US-A1- 2014 055 096
- US-A1- 2015 188 358
- US-A1- 2016 336 765

## Description

### Domaine de l'invention

L'invention se rapporte au domaine technique des systèmes d'équilibrage de cellules composant une batterie.

### Arrière-plan de l'invention

Une batterie est formée d'une pluralité de cellules connectées en série. Ces cellules présentant classiquement des caractéristiques différentes en termes de production, de distribution de température ou encore de courbe de vie, elles ont souvent des états de charge différents, ce qui dégrade la batterie et réduit son efficacité opérationnelle. Ainsi, pour optimiser les capacités et la durée de vie de la batterie, on emploie classiquement un BMS (de l'anglais « Battery Management System »), système électronique permettant de contrôler les états de charge des cellules de la batterie. Un tel élément veille à l'équilibrage des charges des cellules en court-circuitant certaines cellules ou en redistribuant l'énergie entre les cellules.

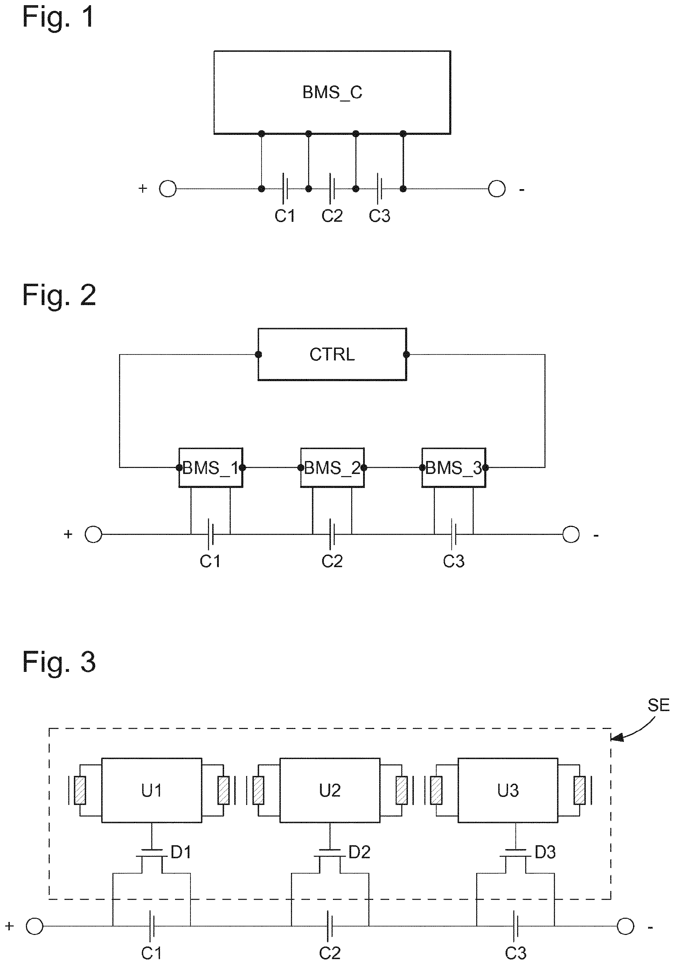

A la figure 1 est illustrée une pluralité de cellules C1-C3 agencées en série, chacune connectée à un BMS centralisé BMS_C par liaison filaire. Le BMS a ainsi accès à des paramètres d'état de chaque cellule, lui permettant de décider si un équilibrage est nécessaire, et de mettre en œuvre l'équilibrage le cas échéant. Ce système a pour inconvénient de nécessiter un grand nombre de câbles de connexion, ce qui rend le système complexe à installer, lourd et volumineux, et rend difficile l'ajout de nouvelles cellules, le BMS ne pouvant, en général, gérer qu'un nombre prédéfini de cellules.

Pour limiter ces inconvénients, il est connu d'utiliser un BMS à topologie distribuée, tel qu'illustré à la figure 2 de la présente demande. Dans ce cas, chaque cellule CX, X=1..3, est connectée à une carte de circuit imprimé BMS_X (appelée « BMS Board », en anglais), et les cartes sont reliées entre elles ainsi qu'à un contrôleur CTRL par liaison filaire.

Bien que le nombre de câbles de connexion soit réduit par rapport à une topologie centralisée, de nombreuses connexions filaires restent nécessaires, ce qui rend l'installation et la maintenance du système compliquées. De plus, même si l'ajout de cellules supplémentaires est simplifié, il reste fastidieux car il est nécessaire de déconnecter et reconnecter les cartes entre elles, ainsi que d'adapter le contrôleur en fonction du nombre de cellules ajoutées, ce qui impose un retour du système d'équilibrage à l'usine.

Le document US 6,100,663 A décrit un chargeur de batterie avec un transfert d'énergie de manière inductive pour une voiture électrique. Une gestion de charge de la batterie est effectuée. La batterie comprend une ou plusieurs cellules. Chaque cellule est associée à des moyens de charge de batterie ayant des moyens de contrôle pour déterminer l'état de charge de la cellule associée.

Le document US 2015/0188358 A1 décrit un appareil de charge capable de charger sans fil des cellules de batterie. Il est prévu de maintenir un équilibre de charge entre différentes cellules de batterie voisines par induction magnétique. Cela concerne principalement la charge de batteries de téléphones portables.

Le document US 2016/0336765 A1 décrit un appareil pour le contrôle de charge et décharge d'une batterie sans mentionner une communication inductive.

Le document US 2014/0055096 A1 décrit une batterie avec un ensemble de cellules et un procédé d'équilibrage de charge des cellules.

Par conséquent, il existe un besoin d'un système d'équilibrage de cellules composant une batterie, présentant une meilleure évolutivité et nécessitant moins de connexions filaires que les systèmes de l'art antérieur.

### Résumé de l'invention

L'invention se rapporte à une unité d'équilibrage embarquée sur une cellule de batterie, et comprenant :
- des moyens de mesure de paramètres d'état de la cellule,
- des moyens de communication sans fil, permettant d'envoyer et de recevoir des paramètres d'état,
- des moyens de transfert d'énergie sans fil.

L'invention se rapporte également à un système d'équilibrage de cellules de batterie connectées en série, comportant une pluralité d'unités d'équilibrage telles que décrites précédemment, chaque unité d'équilibrage étant embarquée sur une cellule de la batterie, les moyens de communication de chaque unité d'équilibrage permettant d'envoyer ses paramètres d'état aux unités d'équilibrage adjacentes et de recevoir les paramètres d'état des unités d'équilibrage adjacentes, les moyens de transfert d'énergie permettant d'envoyer de l'énergie aux unités d'équilibrage adjacentes ou de recevoir de l'énergie provenant des unités d'équilibrage adjacentes.

L'unité d'équilibrage peut déterminer, en fonction de ses propres paramètres d'état et des paramètres d'état reçus des unités d'équilibrage adjacentes via les moyens de communication sans fil, si la cellule est trop ou trop peu chargée par rapport aux cellules adjacentes. Les moyens de transfert d'énergie permettent alors de transférer une partie de l'énergie de la cellule à l'une ou aux deux cellules adjacentes, ou à l'inverse, de recevoir de l'énergie des cellules adjacentes.

On note que le transfert d'énergie est opérable pendant la charge, la décharge et l'état de repos de la cellule, car l'unité d'équilibrage est en permanence alimentée par la cellule.

Par ailleurs, aucun câble n'est nécessaire entre les différentes unités d'équilibrage. De plus, chaque unité d'équilibrage fonctionne de manière autonome, il n'y a donc pas besoin de les connecter à une unité centrale pour activer l'équilibrage. Tout cela limite les connectiques, la complexité du système, son encombrement, son poids, etc.

En outre, le système d'équilibrage est totalement modulable : il suffit de placer deux unités d'équilibrage à côté l'une de l'autre pour qu'une communication de données ou un transfert d'énergie soit possible, ce qui facilite l'ajout ou le retrait de cellules.

Les moyens de communication et les moyens de transfert d'énergie sont les mêmes. Cela permet de limiter le nombre de composants de l'unité d'équilibrage, ce qui a des avantages en termes de complexité, d'encombrement, de poids, de coût et de dépense énergétique.

Il s'agit de moyens inductifs, constitués de deux bobines disposées de part et d'autre de la cellule. Chaque bobine permet de communiquer avec l'une des unités d'équilibrage affectées aux cellules adjacentes. Avantageusement, les bobines sont calibrées pour des communications de données et des transferts d'énergie optimaux. Les communications de données et les transferts d'énergie inter-unités d'équilibrage sont d'autant plus optimaux que les distances entre les unités d'équilibrage sont faibles.

Dans un mode de réalisation non limitatif, les paramètres d'état d'une cellule comportent des mesures d'une tension et d'une température de la cellule, et un statut de fonctionnement de la cellule.

Dans un mode de réalisation non limitatif, les paramètres d'état comportent une durée de fonctionnement de la cellule.

Dans un mode de réalisation non limitatif, l'unité d'équilibrage comprend une mémoire comportant des paramètres de réglage de la cellule et un historique d'événements relatifs à la cellule. L'unité d'équilibrage a accès à cette mémoire pour enregistrer et conserver l'historique d'événements. Il est possible, via des moyens de communication sans fil de données, depuis un appareil de maintenance externe à la cellule par exemple, d'accéder à l'historique des événements de la cellule et aux paramètres de réglage embarqués.

Avantageusement, l'unité d'équilibrage prend en compte les paramètres de réglage et l'historique d'événements pour décider de transférer ou recevoir de l'énergie.

Dans un mode de réalisation non limitatif, le système d'équilibrage comporte une pluralité d'éléments dissipatifs, chaque élément dissipatif étant affecté à une cellule et connecté en parallèle de ladite cellule, et l'unité d'équilibrage embarqué sur ladite cellule comporte des moyens de contrôle de l'élément dissipatif. L'élément dissipatif est utilisé en fin de charge de la cellule. L'élément dissipatif permet de dissiper une partie de l'énergie inutile pour la cellule, puisque celle-ci est intégralement chargée.

Dans un mode de réalisation non limitatif, les paramètres d'état comportent une mesure du courant dans l'élément dissipatif.

Dans un mode de réalisation non limitatif, chaque élément dissipatif est constitué d'un transistor à effet de champ à grille métal-oxyde (MOSFET) dont le drain et la source sont branchés de part et d'autre de la cellule associée, et la grille est connectée à l'unité d'équilibrage associée. Toutefois, l'élément dissipatif pourrait être n'importe quel élément capable de court-circuiter la cellule (par exemple une résistance, un interrupteur, un commutateur, un transistor bipolaire...) lorsque celle-ci est chargée.

### Description sommaire des dessins

D'autres particularités et avantages ressortiront clairement de la description qui en est faite ci-après, à titre indicatif et nullement limitatif, en référence aux dessins annexés, dans lesquels :
- la figure 1, déjà décrite, représente une pluralité de cellules agencées en série, dont l'équilibrage est assuré par un BMS à topologie centralisée, selon l'art antérieur,
- la figure 2, déjà décrite, représente une pluralité de cellules agencées en série, dont l'équilibrage est assuré par un BMS à topologie distribuée, selon l'art antérieur,
- la figure 3 représente une pluralité de cellules agencées en série, dont l'équilibrage est assuré par un système d'équilibrage par transfert d'énergie sans fil selon l'invention,
- la figure 4 représente une unité d'équilibrage d'un système d'équilibrage par transfert d'énergie sans fil selon l'invention,
- la figure 5 représente une cellule embarquant une unité d'équilibrage selon l'invention.

### Description détaillée d'au moins un mode de réalisation

La figure 3 représente une batterie comprenant des cellules C1-C3 montées en série et formant une batterie, et un système d'équilibrage SE de ladite batterie selon l'invention. Le système d'équilibrage comporte une pluralité d'éléments dissipatifs D1-D3 et une pluralité d'unités d'équilibrage U1-U3. A chaque cellule est associée un élément dissipatif et une unité d'équilibrage. On note que dans l'exemple décrit, les cellules, les éléments dissipatifs et les unités d'équilibrage sont chacun au nombre de trois, mais naturellement ce nombre n'est pas limitatif.

Chaque élément dissipatif est composé d'un MOSFET dont le drain et la source sont branchés de part et d'autre de la cellule associée, et dont la grille est connectée à l'unité d'équilibrage associée. Toutefois, l'élément dissipatif pourrait être n'importe quel élément capable de court-circuiter la cellule (par exemple une résistance, un interrupteur, un commutateur, un transistor bipolaire...) lorsque celle-ci est chargée.

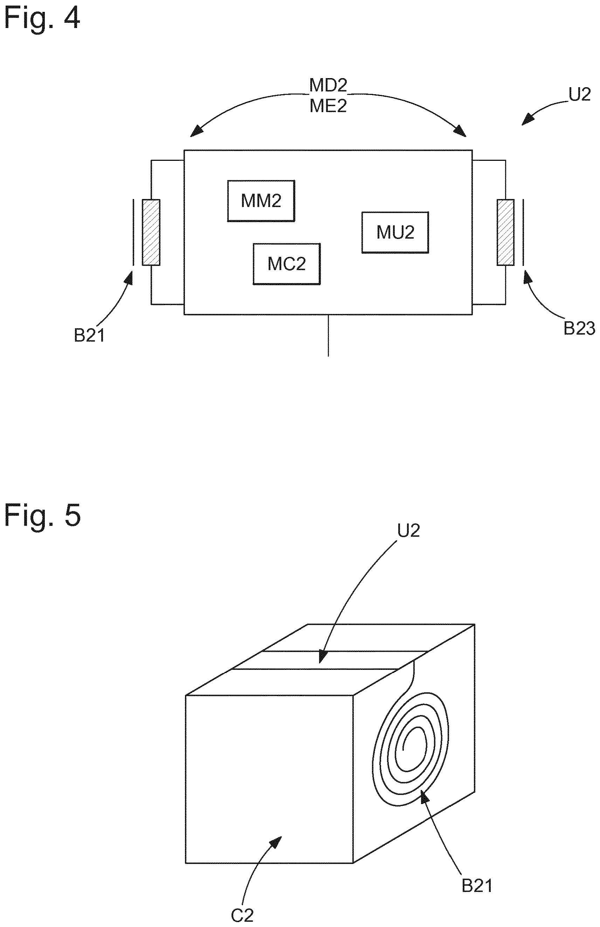

Chaque unité d'équilibrage fonctionne de manière autonome lors d'une affectation à une cellule. Le système d'équilibrage selon l'invention est complètement décentralisé. A titre d'exemple, la figure 4 représente l'unité d'équilibrage U2, étant entendu que les autres unités sont identiques. L'unité d'équilibrage U2 comporte :
- des moyens de contrôle MC2 de l'élément dissipatif D2 associé,
- des moyens de mesure MM2 de paramètres d'état de la cellule C2 associée,
- des moyens de communication sans fil MD2 avec les unités d'équilibrage U1, U3 affectées aux cellules adjacentes C1, C3, permettant notamment d'envoyer et de recevoir des paramètres d'état,
- des moyens de transfert d'énergie sans fil ME2 avec les unités d'équilibrage U1, U3 affectées aux cellules adjacentes C1, C3,
- une mémoire MU2 comportant des paramètres de réglage de la cellule C2 et un historique d'événements relatifs à la cellule.

Les moyens de contrôle MC2 permettent de contrôler l'élément dissipatif D2 associé, en court-circuitant ou non la cellule C2 associée.

Les moyens de mesure MM2 permettent de mesurer des paramètres d'état qui comprennent notamment la tension de la cellule C2 associée, le courant parcourant l'élément dissipatif D2, et la température de la cellule C2.

Les moyens de communication MD2 permettent à l'unité d'équilibrage U2 d'envoyer ses paramètres d'état aux unités d'équilibrage U1, U3 des cellules adjacentes C1, C3, et par ailleurs de recevoir leurs paramètres d'état. Les moyens de communication MD2 sont donc bidirectionnels. Les moyens de communication MD2 permettent également, dans un mode de réalisation, de recevoir ou envoyer des statuts (indiquant par exemple si une cellule est en cours d'équilibrage) et des commandes.

Les moyens de transfert d'énergie ME2 permettent à la cellule C2 d'envoyer aux cellules adjacentes C1, C3 de l'énergie de la cellule C2, ou de recevoir de l'énergie provenant des cellules adjacentes C1, C3. Les moyens de transfert d'énergie ME2 sont donc bidirectionnels. Le transfert d'énergie est sans fil, et géré par l'unité d'équilibrage. Les paramètres d'état transmis entre la cellule C2 et les cellules adjacentes C1, C3 permettent de réguler la quantité d'énergie à transmettre.

Dans l'exemple représenté, les moyens de communication MD2 et de transfert d'énergie ME2 sont de type inductif et sont constitués de deux bobines B21, B23, l'une B21 des deux bobines B21, B23 servant à communiquer avec l'une U1 des deux unités adjacentes U1, U3, l'autre B23 des deux bobines B21, B23 servant à communiquer avec l'autre U3 des deux unités adjacentes U1, U3. Divers fréquences sont utilisées pour la communication de données et le transfert d'énergie. On note que d'autres types de couplage que le couplage inductif entre les unités d'équilibrage sont possibles. Le document « A review on the recent development of capacitive wireless power transfer technology » de Fei Lu, décrit, notamment en référence à sa figure 2, différents types de couplages possibles.

La mémoire MU2 comporte des paramètres de réglage de la cellule C2. Les paramètres de réglage comportent des paramètres d'usine propres à la production de la batterie, par exemple son numéro d'identification, et des paramètres pour l'équilibrage, par exemple une tension minimale et maximale de décharge et de charge ou encore une table de correspondance de l'état de charge en fonction de la tension de la cellule. La mémoire MU2 comporte également un historique d'événements de la cellule C2 survenus tout au long de sa durée de vie, par exemple la durée d'utilisation de la cellule, des alertes, des mauvaises manipulations électriques de la cellule, etc. La mémoire est une zone protégée, on peut considérer qu'il s'agit d'un coffre-fort de données. Seuls l'unité d'équilibrage U2 elle-même et le fabriquant ont accès à la mémoire MU2 et peuvent modifier les données qu'elle contient. L'unité d'équilibrage U2 peut par exemple être posée sur un support dédié sans fil qui permet d'accéder, via les moyens de communication MD2, à la mémoire MU2.

L'ensemble cellule C2, élément de dissipation D2 et unité d'équilibrage U2 forme un ensemble compact, comme illustré à la figure 5. L'unité d'équilibrage U2 est embarquée dans la cellule C2. La figure 5 représente la cellule C2, de part et d'autre de laquelle sont plaquées les deux bobines B21, B23, les deux bobines étant reliées à l'unité d'équilibrage U2 montée sur un circuit imprimé flexible. Cette disposition garantit une symétrie de structure permettant de ne pas avoir à se soucier de l'orientation de l'ensemble, lors de son montage ou son remplacement. La miniaturisation du système permet de minimiser son impact en termes de volume et de poids. Les bobines B21, B31 sont mécaniquement positionnées pour garantir un rendement de transfert d'énergie optimal.

Le système d'équilibrage selon l'invention présente de nombreux avantages, entre autres :
- il est modulable, c'est-à-dire il permet l'ajout d'un nombre indéfini de cellules en série,
- il permet une utilisation dans les états actifs (charge et décharge) et de repos de la cellule,
- il permet la communication entre cellules adjacentes pour l'adaptation des niveaux d'énergie et l'échange de données,
- il permet, par une communication sans fil chaînée entre toutes les cellules mises en série, de transférer des commandes ou des informations à plusieurs cellules,
- il permet d'optimiser le transfert d'énergie par un alignement mécanique des cellules de la batterie,
- les distances entre les cellules étant relativement courtes, le rendement du transfert d'énergie est amélioré,
- il permet un accès à distance à chaque cellule pour connaître (et éventuellement modifier) ses caractéristiques et informations de paramétrage,
- il optimise la communication entre cellules de l'équilibrage, à travers le couplage, et
- il permet une stabilité mécanique et de positionnement des éléments de transfert d'énergie.

Bien entendu, la présente invention ne se limite pas à l'exemple illustré et est susceptible de diverses variantes et modifications qui apparaîtront à l'homme de l'art.

## Revendications

1. Unité d'équilibrage (U2) embarquée sur une cellule (C2) de batterie, et comprenant :
- des moyens de mesure (MM2) de paramètres d'état de la cellule (C2),
- des moyens de communication (MD2) sans fil, permettant d'envoyer et de recevoir des paramètres d'état,
- des moyens de transfert d'énergie (ME2) sans fil,
**caractérisé en ce que** les moyens de communication (MD2) et les moyens de transfert d'énergie (ME2) sont les mêmes, de type inductif et constitués de deux bobines (B21, B23) disposées de part et d'autre de la cellule (C2)

2. Unité d'équilibrage (U2) selon l'une des revendications précédentes, les paramètres d'état d'une cellule (C2) comportant des mesures d'une tension et d'une température de la cellule, et un statut de fonctionnement de la cellule.

3. Unité d'équilibrage (U2) selon l'une des revendications précédentes, les paramètres d'état d'une cellule (C2) comportant une durée de fonctionnement de la cellule.

4. Unité d'équilibrage (U2) selon l'une des revendications précédentes comprenant une mémoire (MU2) comportant des paramètres de réglage de la cellule (C2) et un historique d'événements relatifs à la cellule (C2).

5. Système d'équilibrage (SE) de cellules (C1, C2, C3) de batterie connectées en série, comportant une pluralité d'unités d'équilibrage (U1, U2, U3) selon l'une des revendications précédentes, chaque unité d'équilibrage (U1, U2, U3) étant embarquée sur une cellule (C1, C2, C3) de la batterie, les moyens de communication (MD2) de chaque unité d'équilibrage (U2) permettant d'envoyer ses paramètres d'état aux unités d'équilibrage adjacentes (U1, U3) et de recevoir les paramètres d'état des unités d'équilibrage adjacentes (U1, U3), les moyens de transfert d'énergie (ME2) de chaque unité d'équilibrage (U2) permettant d'envoyer de l'énergie aux unités d'équilibrage adjacentes (U1, U3) ou de recevoir de l'énergie provenant des unités d'équilibrage adjacentes (U1, U3).

6. Système d'équilibrage (SE) selon la revendication précédente, comportant une pluralité d'éléments dissipatifs (D1, D2, D3), chaque élément dissipatif (D1, D2, D3) étant affecté à une cellule (C1, C2, C3) et connecté en parallèle de ladite cellule, et l'unité d'équilibrage (U2) embarqué sur ladite cellule (C2) comporte des moyens de contrôle (MC2) de l'élément dissipatif (D2).

7. Système d'équilibrage (SE) selon la revendication précédente, les paramètres d'état d'une cellule (C1, C2, C3) comportant une mesure du courant dans l'élément dissipatif (D1, D2, D3) connecté en parallèle de ladite cellule.

8. Système d'équilibrage selon l'une des revendications 6 ou 7, chaque élément dissipatif (D1, D2, D3) étant constitué d'un transistor à effet de champ à grille métal-oxyde dont le drain et la source sont branchés de part et d'autre de la cellule (C1, C2, C3), et la grille est connectée à l'unité d'équilibrage (U1, U2, U3).

## Patentansprüche

1. Ausgleichseinheit (U2), montiert auf einer Batteriezelle (C2) und Folgendes umfassend:
- Messmittel (MM2) für Parameter des Zustandes der Zelle (C2),
- Mittel zur drahtlosen Kommunikation (MD2), es ermöglichend, Zustandsparameter zu versenden und zu empfangen,
- Mittel zum drahtlosen Energietransfer (ME2), **dadurch gekennzeichnet, dass** die Kommunikationsmittel (MD2) und die Energietransfermittel (ME2) dieselben sind, vom induktiven Typ und bestehend aus zwei Spulen (B21, B23), beidseitig der Zelle (C2) angebracht.

2. Ausgleichseinheit (U2) nach Anspruch 1, wobei die Parameter des Zustandes einer Zelle (C2) Messungen einer Spannung und einer Temperatur der Zelle und einen Funktionszustand der Zelle umfassen.

3. Ausgleichseinheit (U2) nach einem der vorhergehenden Ansprüche, wobei die Parameter des Zustandes einer Zelle (C2) eine Funktionsdauer der Zelle umfassen.

4. Ausgleichseinheit (U2) nach einem der vorhergehenden Ansprüche, einen Speicher (MU2) umfassend, Parameter zur Einstellung der Zelle (C2) und eine Historie von Ereignissen relativ zu der Zelle (C2) umfassend.

5. Ausgleichssystem (SE) von in Reihe geschalteten Batteriezellen (C1, C2, C3), umfassend eine Vielzahl von Ausgleichseinheiten (U1, U2, U3) nach einem der vorhergehenden Ansprüche, wobei jede Ausgleichseinheit (U1, U2, U3) auf eine Zelle (C1, C2, C3) der Batterie montiert ist, wobei es die Kommunikationsmittel (MD2) jeder Ausgleichseinheit (U2) erlauben, ihre Zustandsparameter zu den angrenzenden Ausgleichseinheiten (U1, U3) zu senden und die Zustandsparameter von den angrenzenden Ausgleichseinheiten (U1, U3) aufzunehmen, wobei es die Energietransfermittel (ME2) jeder Ausgleichseinheit (U2) erlauben, Energie an die angrenzenden Ausgleichseinheiten (U1, U3) zu senden oder von den angrenzenden Ausgleichseinheiten (U1, U3) kommende Energie aufzunehmen.

6. Ausgleichssystem (SE) nach dem vorhergehenden Anspruch, umfassend eine Vielzahl von dissipativen Elementen (D1, D2, D3), wobei jedes dissipative Element (D1, D2, D3) einer Zelle (C1, C2, C3) zugeordnet ist und parallel zu der Zelle geschaltet ist, und die auf der Zelle (C2) montierte Ausgleichseinheit (U2) Steuerungsmittel (MC2) des dissipativen Elements (D2) umfasst.

7. Ausgleichssystem (SE) nach dem vorhergehenden Anspruch, wobei die Parameter des Zustandes einer Zelle (C1, C2, C3) eine Messung des Stroms in dem dissipativen Element (D1, D2, D3) umfasst, zu der Zelle parallel geschaltet.

8. Ausgleichssystem nach einem der Ansprüche 6 oder 7, wobei jedes dissipative Element (D1, D2, D3) aus einem Transistor mit Feldeffekt mit Metalloxid-Raster besteht, dessen Ablass und dessen Quelle beidseitig der Zelle (C1, C2, C3) angeschlossen sind und wobei das Raster mit der Ausgleichseinheit (U1, U2, U3) verbunden ist.

## Claims

1. Balancing unit (U2) installed on a battery cell (C2), and comprising:
- means (MM2) for measuring state parameters of the cell (C2),
- wireless communication means (MD2), making it possible to send and receive state parameters, and
- wireless power transfer means (ME2),
**characterised in that** the communication means (MD2) and the power transfer means (ME2) are the same, of the inductive type and formed by two coils (B21, B23) disposed on both sides of the cell (C2).

2. Balancing unit (U2) according to claim 1, the state parameters of a cell (C2) including measurements of voltage and temperature of the cell, and an operational status of the cell.

3. Balancing unit (U2) according to one of the preceding claims, the state parameters of a cell (C2) including an operational duration of the cell.

4. Balancing unit (U2) according to one of the preceding claims, comprising a memory (MU2) including parameters for adjusting the cell (C2) and a history of events relating to the cell (C2).

5. Balancing system (SE) of battery cells (C1, C2, C3) connected in series, including a plurality of balancing units (U1, U2, U3) according to one of the preceding claims, each balancing unit (U1, U2, U3) being installed on a cell (C1, C2, C3) of the battery, the communication means (MD2) of each balancing unit (U2) making it possible to send its state parameters to the adjacent balancing units (U1, U3) and to receive the state parameters from the adjacent balancing units (U1, U3), the power transfer means (ME2) of each balancing unit (U2) making it possible to send power to the adjacent balancing units (U1, U3) or to receive power emanating from the adjacent balancing units (U1, U3).

6. Balancing system (SE) according to the preceding claim, including a plurality of dissipative elements (D1, D2, D3), each dissipative element (D1, D2, D3) being assigned to a cell (C1, C2, C3), and connected in parallel to said cell, and the balancing unit (U2) installed on said cell (C2) includes means (MC2) for controlling the dissipative element (D2).

7. Balancing system (SE) according to the preceding claim, the state parameters of a cell (C1, C2, C3) including a measurement of the current in the dissipative element (D1, D2, D3) connected in parallel to said cell.

8. Balancing system (SE) according to one of claims 6 or 7, each dissipative element (D1, D2, D3) is formed by a metal oxide gate field effect transistor, the drain and the source of which are branched on both sides of the cell (C1, C2, C3), and the gate of which is connected to the balancing unit (U1, U2, U3).
